# EUROPEAN PATENT APPLICATION

(11) **EP 4 203 249 A1**
(43) Date of publication of application: **28.06.2023**
(21) Application number: 21217469.2
(22) Date of filing: 23.12.2021
(51) Int. Cl.: H02K 1/24, H02K 3/32, H02K 15/12

(54) **ELECTRICAL INSULATION FOR A SEPARATELY EXCITED ROTOR**

(71) Applicant: Valeo eAutomotive Germany GmbH, 91056 Erlangen (DE)
(72) Inventor: Wieczorek, Christoph, 97616 c/o VSeA, Siemenstr. 14, Bad Neustadt a.d.Saale (DE); BACH, Regina, 97616 c/o VSeA, Siemenstr. 14, Bad Neustadt a.d.Saale (DE)
(74) Representative: Valeo Powertrain Systems

(57) **Abstract**

The invention concerns a rotor for a rotary electric machine, the rotor comprising a rotor shaft (4) configured to rotate around an axis of rotation; and a rotor body (2) formed of a stack of laminations and being configured to be mounted coaxially on the rotor shaft (4), the rotor body (2) having a plurality of teeth (21) projecting radially and slots (22) corresponding to spaces between adjacent teeth of the plurality of teeth (21). The rotor further comprising a field coil wound around each tooth of the plurality of teeth (21) and passing through the slots (22), and an insulation resin laid over walls (23) of the slots (22) between the rotor body (2) and the field coil such that to electrically insulate the rotor body (2) from the field coil.

## Description

### FIELD OF THE INVENTION

The present invention belongs to the field of rotary electric machines configured to be on board of an automotive vehicle, such as an electric vehicle (EV) or a hybrid vehicle (HV).

The present invention relates in particular to the field of separately excited rotors, also called wound rotors or slip ring rotors, integrated to rotary electric machines.

### BACKGROUND OF THE INVENTION

As is known, an electric or a hybrid automotive vehicle presents an electric drive comprising a rotary electric machine which need to be supplied with electric power, for instance by a high voltage power supply battery, to deliver a mechanical power in order to ensure propulsion of the vehicle.

In a general manner, the rotary electric machine comprises a stator, referring to a fixed part of the rotary electric machine, and a rotor, referring to a rotating part of the rotary electric machine. The rotor then comprises a rotor shaft configured to ensure the transmission of the mechanical power between the rotary electric machine and an exterior driven apparatus, notably the wheels of the vehicle.

In particular, it is known to have the rotor separately excited using a field coil. This type of rotors is commonly referred as wound rotors or slip ring rotors. Such a rotor comprises a rotor body formed of a stack of laminations and has a plurality of teeth projecting radially. Then, the field coil is configured to be wound around each of the plurality of teeth, while being electrically insulated from the stack of laminations.

A conventional solution to electrically insulate the field coil from the stack of laminations is to provide an insulation paper in-between the plurality of teeth, as described in document EP2807726A1. In a general manner, the insulation paper is pre-folded and positioned manually on the stack of laminations before proceeding with the winding of the field coil above the insulation paper. The positioning of the insulation paper needs thus to be secured, otherwise the insulation paper could be damaged or misplaced during the winding process. This could reduce the quality of the insulation between the field coil and the stack of laminations. Moreover, securing the positioning of the insulation paper is complex from a manufacturing point of view.

In this context, the main objective of the present invention is to provide a rotor with an improved insulation system and a corresponding method for producing the rotor, such that the rotor is easier to manufacture and has an increased lifetime.

### SUMMARY OF THE INVENTION

More precisely, the present invention concerns a rotor for a rotary electric machine, the rotor comprising a rotor shaft configured to rotate around an axis of rotation, and a rotor body formed of a stack of laminations and being configured to be mounted coaxially on the rotor shaft. The rotor body has a plurality of teeth projecting radially and slots corresponding to spaces between adjacent teeth of the plurality of teeth. Moreover, the rotor has a field coil wound around each tooth of the plurality of teeth and passing through the slots. The rotor further comprises an insulation resin laid over walls of the slots between the rotor body and the field coil such that to electrically insulate the rotor body from the field coil.

The invention provides an alternative to using an insulation paper or an insulating element made of plastic for providing electrical insulation between the rotor body and the field coil in-between the plurality of teeth. The insulation resin presents the advantage of staying still during winding the field coil around the plurality of teeth, and during the in-service life of the rotor. Moreover, thanks to the insulation resin, it is easier to control the localization and the thickness of the insulation system between the plurality of teeth and the field coil. The invention presents also the substantial gain of improving the quality of the electrical insulation between the field coil and the stack of laminations through the lifetime of the rotor. Besides, the invention eases the manufacturing of the rotor, notably by making it possible to automatize the process of setting up the electrical insulation between the rotor body and the field coil.

Advantageously, the insulation resin is laid over a portion of the walls of the slots, or over the whole surface of the walls of the slots.

Advantageously, each tooth of the plurality of teeth presents a substantially T-shape, the foot of the T being radially directed towards the axis of rotation of the rotor. Then, each slot between two adjacent teeth of the plurality of teeth especially comprises two lateral sides respectively on each one of the two adjacent teeth, a bottom side connecting ends of the two lateral sides, and two top sides respectively on each one of the two adjacent teeth. The walls of the corresponding slot comprise then the two lateral sides, the bottom side, and the two top sides. Therefore, the insulation resin is laid over at least a portion of each of the two lateral sides of each slot, preferably substantially over the whole surface of the two lateral sides of the corresponding slot. The insulation resin may further be laid over at least a portion of the bottom side and/or at least a portion of the two top sides of the corresponding slot, if appropriate.

In a nutshell, the use of the insulation resin facilitates the setting-up of the electrical insulation between the plurality of teeth and the field coil, even when the geometry of the slots is complex, for instance when the teeth are T-shaped. In a more general manner, the use of the insulation resin provides flexibility.

Advantageously, the insulation resin has a substantially constant thickness all over the walls of the slots. The present invention thus facilitates the design of the thickness of the insulation resin.

Advantageously, the insulation resin is an epoxy resin, notably an air-drying epoxy resin.

Advantageously, the insulation resin comprises a curing agent, especially an ultraviolet curing agent.

The present invention also concerns a method for producing the rotor as described previously, the method comprising:
- depositing the insulation resin over the walls of the slots through at least one nozzle.

Advantageously, the at least one nozzle is translated, notably automatically, along the axis of rotation of the rotor such that to perform the step of depositing the insulation resin through an axial length of the rotor body.

Advantageously, the at least one nozzle comprises one nozzle, two nozzles, or more than two nozzles, if appropriate. In a configuration using two nozzles, the insulation resin may be deposited on two different areas of the walls of each slot at a same time. This allows to reduce the production time of the rotor, and the related cost.

Advantageously, the at least one nozzle comprise a plurality of channels, such that to be able to provide a more uniform depositing of the insulation resin on the walls of the slots.

Advantageously, depositing the insulation resin over the walls of the slots comprises spraying the insulation resin. Spraying the insulation resin gives the substantial gain of allowing to deposit the insulation resin on a more complex surface of the walls, for instance in a configuration in which the walls have the two lateral sides, the bottom side, and the two top sides.

Alternatively, depositing the insulation resin over the walls of the slots advantageously comprises trickling the insulation resin.

Advantageously, the insulation resin comprising the ultraviolet curing agent, the method further comprises:
- curing the insulation resin through emitting an ultraviolet light towards the insulation resin by means of an ultraviolet source.

Advantageously, the steps of depositing the insulation resin over the walls of the slots and of curing the insulation resin are performed by translating simultaneously the at least one nozzle and the ultraviolet source axially along the axis rotation of the rotor, the at least one nozzle and the ultraviolet source being optically isolated from one another by means of an optical shield. Hence, depositing and curing the insulation resin are advantageously performed right after the other. This allows to avoid the spilling of the insulation resin and to reduce the production time.

Advantageously, the method comprises horizontally positioning the rotor prior to depositing the insulation resin over the walls of the slots. This permits to limit potential spilling of the insulation resin towards one of two axial ends of the rotor body due to gravity, if the rotor was to be positioned vertically.

According to an aspect of the invention, the invention relates to the rotary electric machine comprising the rotor as described previously. The rotary electric machine especially comprises a stator, the stator surrounding coaxially the rotor.

Another aspect of the invention is the electric drive, comprising the rotary electric machine and an inverter configured to convert a direct current voltage coming from a high-voltage power supply battery into an alternating current voltage so as to drive the rotary electric machine. The AC voltage may be a multiphase AC voltage, especially a three-phase voltage.

A further aspect of the invention is an electric of a hybrid vehicle, comprising the electric drive for driving the vehicle. The vehicle may comprise the high-voltage power supply battery, preferably a rechargeable battery for providing the DC voltage to the inverter, if applicable.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
Figure 1 is a schematic diagram of a view of an example of a rotor according to an embodiment of the invention;
Figure 2 is a schematic diagram of a partial cut view of the example of the rotor according to an embodiment of the invention;
Figure 3 is a schematic diagram of a partial cut view of an example of a rotor body of the rotor during a step of depositing an insulation resin over walls of a slot between two adjacent teeth of the rotor body according to an embodiment of the invention;
Figure 4 is a schematic diagram of a partial view of the example of the rotor according to an embodiment of the invention;
Figure 5 is a schematic diagram of an automotive electric or hybrid vehicle comprising a rotary electric machine according to an embodiment of the invention.

### DETAILED DESCRIPTION

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

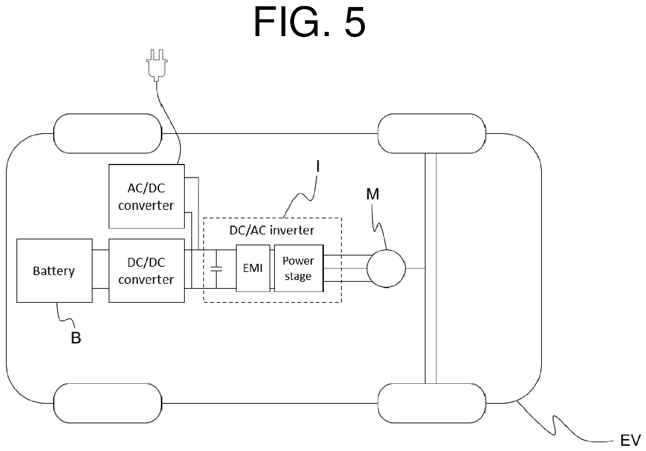

In reference to Figure 5, an aspect of the invention is an electric vehicle or a hybrid electric automotive vehicle EV comprising wheels and an electric drive configured to drive at least indirectly at least one of the wheels of the vehicle. The vehicle may comprise a high-voltage power supply battery B, preferably a rechargeable battery, for providing electric power to the electric drive.

Another aspect of the invention is the electric drive comprising a rotary electric machine M and an inverter I configured to convert a direct current (DC) voltage coming from the high-voltage power supply battery B into an alternating current (AC) voltage in order to drive the rotary electric machine M. The rotary electric machine M may in particular be a three-phase rotary electric machine supplied with a three-phase AC voltage.

The invention also relates to the rotary electric machine comprising a stator, referring to a fixed part of the rotary electric machine, and a rotor, referring to a rotating part of the rotary electric machine. In particular, the stator presents an annular shape and surrounds coaxially the rotor. Generally, the rotary electric machine comprises a casing covering the stator and the rotor. Ordinarily, the stator comprises a stator body formed of a stack of stator laminations having a plurality of stator teeth projecting radially, and stator windings wound around the stator teeth.

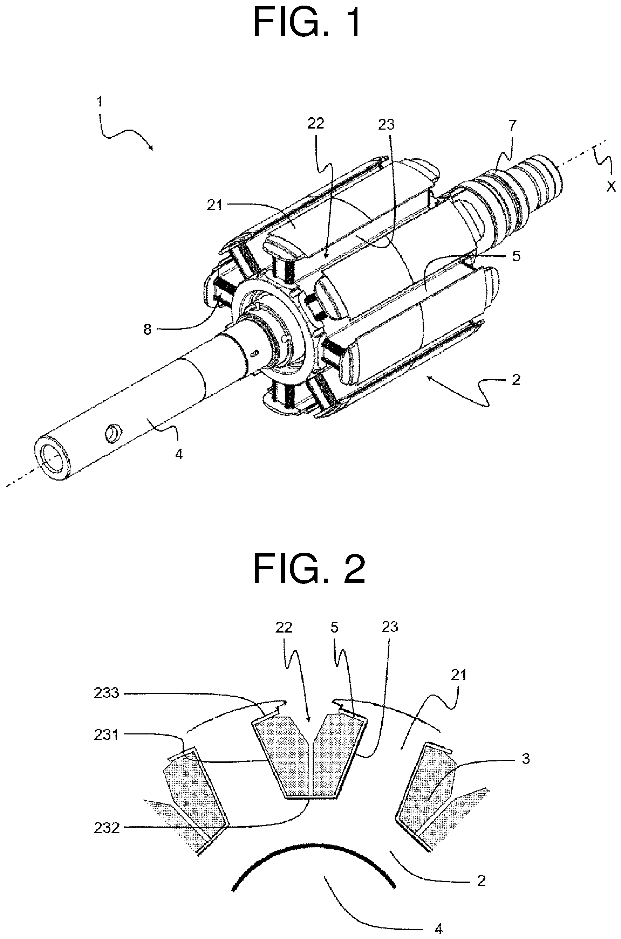

Figure 1 discloses a view of an example of the rotor 1 according to a further aspect of the invention. The rotor 1 is, in particular, a separately excited rotor, also commonly referred as a wound rotor or a slip ring rotor. In this type of rotor, the rotor comprises a field coil connected to an external power supply through slip rings 7. The slip rings 7 correspond to electro-mechanical devices configured to allow the exchange of electric power between a rotating element and a fixed element, here respectively the field coil and the external power supply.

With reference to Figure 1, the rotor 1 comprises a rotor shaft 4 configured to rotate around an axis X of rotation, and a rotor body 2 formed of a stack of laminations and being configured to be mounted coaxially on the rotor shaft 4. The rotor body 2 may be for instance press-fitted on the rotor shaft 4.

Moreover, the rotor body 2 has a plurality of teeth 21 projecting radially and slots 22 corresponding to spaces between adjacent teeth of the plurality of teeth 21. The plurality of teeth 21 may notably comprise four, six, or eight teeth.

Figure 2 illustrates a partial cut view of the example of the rotor 1 according to the invention. The field coil 3 is wound around each tooth of the plurality of teeth 21 and passing through the slots 22. The rotor 1 further comprises an insulation resin 5 laid over walls 23 of the slots 22 between the rotor body 2 and the field coil 3 such that to electrically insulate the rotor body 2 from the field coil 3. The walls 23 especially correspond to faces of the rotor body directed towards the slots 22.

The invention provides an alternative to using an insulation paper or an insulating element made of plastic for providing electrical insulation between the rotor body 2 and the field coil 3 in-between the plurality of teeth. Thus, the invention prevents the problem of positioning the insulation paper. The insulation resin presents the advantage of staying still during winding the field coil around the plurality of teeth, and during the in-service life of the rotor.

Thanks to the insulation resin, it is easier to control the localization and the thickness of the electrical insulation between the plurality of teeth and the field coil. The insulation resin may advantageously be laid over only where it is required.

The invention presents also the substantial gain of improving the quality of the electrical insulation between the field coil and the stack of laminations through the lifetime of the rotor.

Moreover, the invention eases the manufacturing of the rotor, notably by making it possible to automatize the process of setting up the electrical insulation between the rotor body and the field coil.

Besides, the field coil 3 especially forms coil ends projecting axially from respectively two axial ends of the rotor body 2. The rotor 1 may further comprise two end plates 8, as represented in Figure 1, configured to come against the two axial ends of the rotor body 2, such that to provide a mechanical holding of the stack of laminations. The two end plates 8 are especially located between the rotor body 2 and the coil ends such that to electrically insulate the field coil from the rotor body 2.

The insulation resin 5 may for instance be laid over a portion of the walls of the slots, or over the whole surface of the walls of the slots.

For example, each slot between two adjacent teeth of the plurality of teeth may notably have two lateral sides respectively on each one of the two adjacent teeth. The walls of the corresponding slot comprise then the two lateral sides. Therefore, the insulation resin may advantageously be laid over at least a portion of each of the two lateral sides of each slot, preferably substantially over the whole surface of the two lateral sides of the corresponding slot.

In another example, each slot between two adjacent teeth of the plurality of teeth may comprise two lateral sides respectively on each one of the two adjacent teeth, and a bottom side connecting ends of the two lateral sides. The walls of the corresponding slot comprise then the two lateral sides and the bottom side. Therefore, the insulation resin may advantageously be laid over at least a portion of each of the two lateral sides of each slot, preferably substantially over the whole surface of the two lateral sides of the corresponding slot. The insulation resin may further be laid over at least a portion of the bottom side of each slot, if appropriate. Although, the insulation resin may be laid over only the two lateral sides of each slot if it is sufficient.

In the example illustrated in Figure 2, each tooth of the plurality of teeth 21 presents a substantially T-shape, the foot of the T being radially directed towards the axis X of rotation of the rotor. Then, each slot 22 between two adjacent teeth of the plurality of teeth 21 especially comprises two lateral sides 231 respectively on each one of the two adjacent teeth, a bottom side 232 connecting ends of the two lateral sides 231, and two top sides 233 respectively on each one of the two adjacent teeth. The two top sides 233 are respectively connected to one and to the other one of the two lateral sides 231. The walls of the corresponding slot comprise then the two lateral sides 231, the bottom side 232, and the two top sides 233. Therefore, the insulation resin 5 may advantageously be laid over at least a portion of each of the two lateral sides 231 of each slot 22, preferably substantially over the whole surface of the two lateral sides 231 of the corresponding slot 22. The insulation resin 5 may further be laid over at least a portion of the bottom side 232 and/or at least a portion of the two top sides 233 of the corresponding slot 22, if appropriate.

In a nutshell, the use of the insulation resin facilitates the setting-up of the electrical insulation between the plurality of teeth and the field coil, even when the geometry of the slots is complex, for instance when the teeth are T-shaped. The use of the insulation resin provides accordingly flexibility.

In a preferred manner, the insulation resin 5 has a substantially constant thickness over the walls 23 of the slots 22. The present invention thus facilitates the design of the thickness of the insulation resin compared to the conventional solution using the insulation paper. In fact, a high thickness of the insulation paper is complicate to handle from the manufacturing point of view. With the insulation resin, this problem is overcome.

Moreover, the insulation resin 5 is advantageously an epoxy resin, notably an air-drying epoxy resin. The material of the insulation resin 5 is in particular a diamagnetic material and should present a sufficient value of electrical resistivity.

The insulation resin 5 preferably comprises a curing agent, more precisely an ultraviolet curing agent. Thus, the insulation resin is easily and more rapidly cured. Doing so allows advantageously to limit undesired spilling of the insulation resin, and to reduce the production time of the rotor.

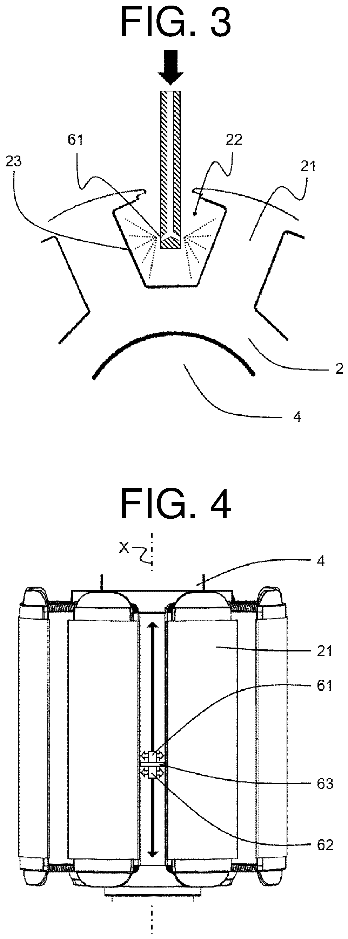

The invention also concerns a method for producing the rotor as described previously. The method comprises depositing the insulation resin 5 over the walls 23 of the slots 22 through at least one nozzle 61, especially prior to winding the field coil around the plurality of teeth. Figure 3 discloses a partial cut view of an example of the rotor body during such a step of depositing the insulation resin 5.

The at least one nozzle 61 is advantageously translated, notably automatically, along the axis X of rotation of the rotor such that to perform the step of depositing the insulation resin through an axial length of the rotor body.

The at least one nozzle 61 may in particular comprise one nozzle, two nozzles, or more than two nozzles if appropriate. In a configuration using two nozzles, the insulation resin may be deposited on two different areas of the walls of each slot at a same time, in particular on the two lateral sides of each slot at a same time. This allows to reduce the production time of the rotor, and the related cost.

The at least one nozzle 61 may for instance comprise a plurality of channels, such that to be able to provide a more uniform depositing of the insulation resin on the walls of the slots.

Furthermore, depositing the insulation resin 5 over the walls 23 of the slots 22 advantageously comprises spraying the insulation resin 5. Then, each of the at least one nozzle 61 may for instance be a spray nozzle. Spraying the insulation resin gives the substantial gain of allowing to deposit the insulation resin on a more complex surface of the walls, for instance in a configuration in which the walls have the two lateral sides, the bottom side, and the two top sides. It is thus possible to deposit the insulation resin on different configurations of the walls of the slots, which could have not been easily insulated with the conventional solution using the insulation paper.

Alternatively, depositing the insulation resin 5 over the walls 23 of the slots 22 may comprise trickling the insulation resin 5.

In a preferred manner, in a case in which the insulation resin further comprises the ultraviolet curing agent, the method comprises curing the insulation resin through emitting an ultraviolet light towards the insulation resin by means of an ultraviolet source 62.

Figure 4 discloses a partial view of the example of the rotor during the step of depositing the insulation resin. Advantageously, the steps of depositing the insulation resin 5 over the walls 23 of the slots 22 and of curing the insulation resin 5 are performed by translating simultaneously the at least one nozzle 61 and the ultraviolet source 62 axially along the axis X rotation of the rotor 1. The translating movement, depositing the insulation resin, and emitting the ultraviolet light, are respectively represented by a thick black arrow, thick white arrows, and other thick white arrows in Figure 4. The at least one nozzle 61 and the ultraviolet source 62 are especially optically isolated from one another by means of an optical shield 63. Hence, depositing and curing the insulation resin are advantageously performed right after the other. This allows to avoid the spilling of the insulation resin and to reduce the production time.

Preferably, the method comprises horizontally positioning the rotor 1 prior to depositing the insulation resin 5 over the walls 23 of the slots 22. This permits to limit potential spilling of the insulation resin towards one of the two axial ends of the rotor body due to gravity, if the rotor was to be positioned vertically.

Although embodiments have been described with reference to a number of illustrative embodiments thereof, it should be understood that numerous other modifications and embodiments can be devised by those skilled in the art that will fall within the spirit and scope of the principles of this disclosure.

## Claims

1. A rotor (1) for a rotary electric machine (M), the rotor (1) comprising:
- a rotor shaft (4) configured to rotate around an axis (X) of rotation;
- a rotor body (2) formed of a stack of laminations and being configured to be mounted coaxially on the rotor shaft (4), the rotor body (2) having a plurality of teeth (21) projecting radially and slots (22) corresponding to spaces between adjacent teeth of the plurality of teeth (21);
- a field coil (3) wound around each tooth of the plurality of teeth (21) and passing through the slots (22);
**characterized in that** the rotor (1) further comprises an insulation resin (5) laid over walls (23) of the slots (22) between the rotor body (2) and the field coil (3) such that to electrically insulate the rotor body (2) from the field coil (3).

2. The rotor (1) as claimed in claim 1, wherein the insulation resin (5) has a substantially constant thickness over the walls (23) of the slots (22).

3. The rotor (1) as claimed in any of the preceding claims, wherein the insulation resin (5) is an epoxy resin, notably an air-drying epoxy resin.

4. The rotor (1) as claimed in any of the preceding claims, wherein the insulation resin (5) comprises a curing agent.

5. A method for producing the rotor (1) as claimed in any of the preceding claims, the method comprising:
- depositing the insulation resin (5) over the walls (23) of the slots (22) through at least one nozzle (61).

6. The method as claimed in the previous claim, wherein depositing the insulation resin (5) over the walls (23) of the slots (22) comprises spraying the insulation resin (5).

7. The method as claimed in the claim 5, wherein depositing the insulation resin (5) over the walls (23) of the slots (22) comprises trickling the insulation resin (5).

8. The method as claimed in any of the claims 5 to 7, the insulation resin (5) comprising an ultraviolet curing agent, wherein the method further comprises:
- curing the insulation resin (5) through emitting an ultraviolet light towards the insulation resin (5) by means of an ultraviolet source (62).

9. The method as claimed in the previous claim, wherein the steps of depositing the insulation resin (5) over the walls (23) of the slots (22) and of curing the insulation resin (5) are performed by translating simultaneously the at least one nozzle (61) and the ultraviolet source (62) axially along the axis (X) rotation of the rotor (1), the at least one nozzle (61) and the ultraviolet source (62) being optically isolated from one another by means of an optical shield (63).

10. The method as claimed in any of the claims 5 to 9, comprising horizontally positioning the rotor (1) prior to depositing the insulation resin (5) over the walls (23) of the slots (22).

11. A rotary electric machine (M) for an electric or a hybrid vehicle (EV), the rotary electric machine (M) comprising the rotor (1) according to any of the claims 1 to 4.
